# EUROPÄISCHE PATENTANMELDUNG

(11) **EP 0 727 600 A1**
(43) Veröffentlichungstag der Anmeldung: **21.08.1996**
(21) Anmeldenummer: 96100726.7
(22) Anmeldetag: 19.01.1996
(51) Int. Cl.: F16K 1/12, F16K 41/10

(54) **Membranventil**

(30) Priorität: 15.02.1995 CH 439/95
(71) Anmelder: Georg Fischer Rohrleitungssysteme AG, CH-8201 Schaffhausen (CH)
(72) Erfinder: Schalk, Adelbert, D-79793 Wutöschingen-Horheim (DE); Greitmann, Ralf, D-78176 Blumberg (DE)
(74) Vertreter: Szilagyi, Marianne

(57) **Zusammenfassung**

Ein Ventil weist einen in einem axialen Durchflusskanal (16) eines Gehäuses (10) angeordneten Strömungskörper (18) und einen mittels eines Druckmediums beaufschlagbaren Hubantrieb auf, der mit einem in axialer Richtung (x) verschiebbaren Verschlussteil wirkverbunden ist. Das Verschlussteil (40) ist vom Durchflusskanal (16) über eine zwischengeordnete, zum Schliessen des Ventils vom Verschlussteil (40) flüssigkeitsdicht gegen den Strömungskörper (18) anpressbare Membran (36) getrennt angeordnet.

Das Ventil weist keinerlei Spalten oder sich bewegende Gleitflächen auf, die in direktem Kontakt zum Durchflussmedium stehen. Dadurch ist eine erhöhte Betriebssicherheit des Ventils gewährleistet.

## Beschreibung

Die Erfindung betrifft ein Ventil mit in einem axialen Durchflusskanal eines Gehäuses angeordnetem Strömungskörper und einem mittels eines Druckmediums beaufschlagbaren Hubantrieb, der mit einem in axialer Richtung verschiebbaren Verschlussteil wirkverbunden ist.

Ein Ventil der eingangs genannten Art ist in der WO 94/27069 offenbart. Bei diesem vorbekannten Ventil steht das als Schieberhülse ausgebildete Verschlussteil in direktem Kontakt mit dem Durchflussmedium. Um ein Auslaufen des Druckmediums in den Durchflusskanal zu verhindern, sind zwischen der Schieberhülse und dem an diese angrenzenden Ventilgehäuse Dichtungen angeordnet. Da diese Dichtungen in direktem Kontakt mit dem Durchflussmedium stehen, können sich ihre mechanischen Eigenschaften mit der Zeit derart verändern, dass eine Dichtigkeit nicht mehr garantiert ist. Zudem können sich in den Spalten, die sich zwangsläufig zwischen der Schieberhülse und dem angrenzenden Gehäuse ergeben, Ablagerungen aus dem Durchflussmedium bilden, die zur Funktionsbeeinträchtigung des Ventils führen können.

Angesichts dieser Gegebenheiten hat sich der Erfinder die Aufgabe gestellt, ein Ventil der eingangs erwähnten Art zu schaffen, welches keine sich bewegenden Gleitflächen aufweist, die in direktem Kontakt zum Durchflussmedium stehen. Ausserdem soll das Ventil eine hohe Betriebssicherheit auch bei Verwendung aggressiver Durchflussmedien gewährleisten.

Zur erfindungsgemässen Lösung der Aufgabe führt, dass das Verschlussteil vom Durchflusskanal über eine zwischengeordnete, zum Schliessen des Ventils vom Verschlussteil flüssigkeitsdicht gegen den Strömungskörper anpressbare Membran getrennt angeordnet ist.

Spezielle und weiterbildende Ausführungsformen des erfindungsgemässen Ventils sind Gegenstand von abhängigen Patentansprüchen.

Durch die flüssigkeitsdichte Abtrennung des Verschlussteils ergeben sich beim erfindungsgemässen Ventil keinerlei Spalten oder sich bewegende Gleitflächen, die einen direkten Kontakt zum Durchflussmedium aufweisen. Dadurch können auch keine Dichtungsprobleme auftreten.

Bei einer bevorzugten Ausführungsform des erfindungsgemässen Ventils ist das Verschlussteil als Schieberhülse ausgestaltet und mit einer einends als Kolben wirkenden Ringscheibe verbunden, die an zylindrischen Innenflächen von zwei konzentrischen, einen Zylinderraum ringförmigen Querschnitts bildenden Gehäuseteilen in axialer Richtung gleitend verschiebbar ist und andernends eine gegen den Strömungskörper bewegbare Stirnfläche aufweist, wobei der Zylinderraum gegenüber dem Durchflusskanal mittels der die Gehäuseteile miteinander verbindenden Membran verschlossen ist.

Bei einer zweckmässigen Ausgestaltung des Ventils ist der Zylinderraum von der als Kolben wirkenden Ringscheibe in zwei unabhängig voneinander mit dem Druckmedium beaufschlagbare Zylinderteilräume unterteilt. Dadurch wird jede beliebige Stellung mit dem Hubantrieb einstellbar, wodurch eine genaue Regelung der Durchflussmenge möglich ist.

Als Material für die bevorzugt im wesentlichen trichterförmig ausgebildete Membran kann beispielsweise ein gummielastischer Werkstoff verwendet werden.

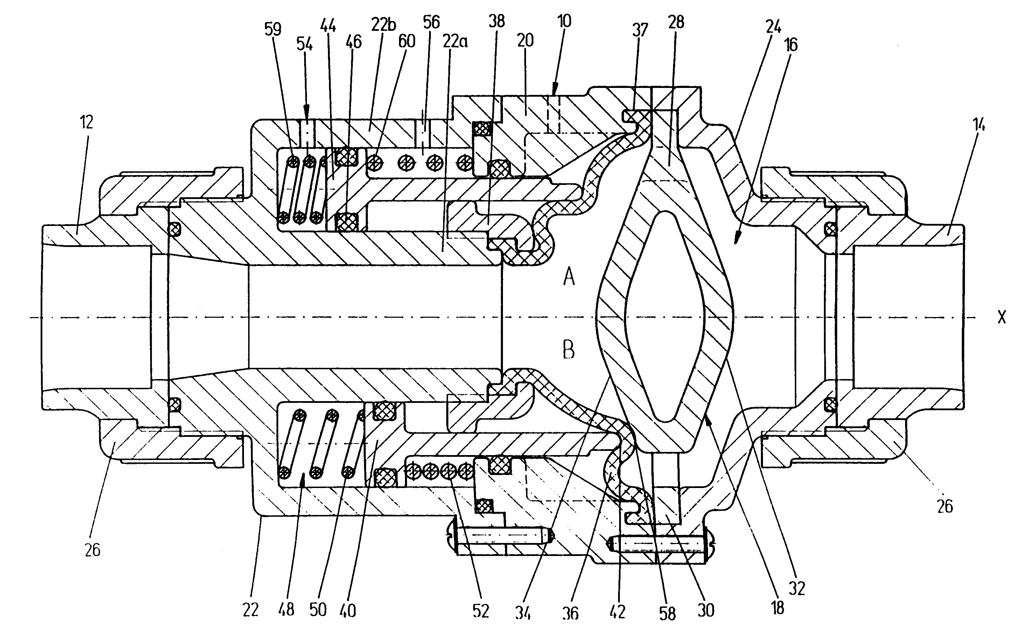

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in ihrer einzigen Figur einen Längsschnitt durch ein Ventil.

Das Gehäuse 10 eines Ventils weist einen zu den anschliessenden Rohrleitungen 12, 14 koaxialen Durchflusskanal 16 auf, in welchem ein Strömungskörper 18 angeordnet ist. Das Gehäuse 10 besteht aus einem Mittelteil 20, dem Strömungskörper 18 und beidseitig angeflanschten Anschlussteilen 22, 24 mit Befestigungsmitteln 26 für die Rohrleitungen 12, 14.

Der Strömungskörper 18 ist mittels Stegen 28 mit einem äusseren Ring 30 verbunden, welcher zwischen dem Anschlussteil 24 und dem Mittelteil 20 zentrisch fest eingespannt angeordnet ist, wodurch eine zum Durchflusskanal 16 koaxiale Anordnung des Strömungskörpers 18 gegeben ist.

Der Durchflusskanal 16 ist im Bereich des Strömungskörpers 18 im Durchmesser erweitert und für beide Durchflussrichtungen strömungsgünstig ausgebildet.

Auch der Strömungskörper 18 ist durch die vorzugsweise etwa kegelförmige Ausbildung der gegenüberliegenden Anströmteile 32, 34 für beide Durchflussrichtungen strömungsgünstig ausgebildet, wobei auch die Stege 28 im Querschnitt entsprechend strömungsgünstig ausgebildet sind.

Eine etwa trichterförmige Membran 36 aus elastischem Material erstreckt sich von einem äusseren Gehäuseteil 22b zu einem inneren Gehäuseteil 22a und ist einerseits in einer Nut 37 im Mittelteil 20 gehalten und andererseits über ein Befestigungsmittel 38 am inneren Teil 22a befestigt.

Ein als Schieberhülse 40 ausgestaltetes Verschlussteil ist konzentrisch zur Achse x des Durchflusskanals 16 angeordnet. An dieser Schieberhülse 40 ist einends eine als Kolben wirkende Ringscheibe 44 angeformt, die über O-Ringdichtungen an den zylindrischen Innenflächen der zwei konzentrischen Gehäuseführungen 22a, b, die einen Zylinderraum 48 ringförmigen Querschnitts bilden, gleitend verschiebbar ist. Das der Ringscheibe 44 entgegengesetzte Ende der Schieberhülse 40 bildet eine Stirnfläche 42. Der Zylinderraum 48 ist durch die Membran 36 vom Durchflusskanal 16 flüssigkeitsdicht abgetrennt.

Der Zylinderraum 48 wird von der als Kolben wirkenden Ringscheibe 44 in zwei Zylinderteilräume 50, 52 unterteilt, die über entsprechende Kanäle 54, 56 mit dem Druckmedium beaufschlagt werden können. In der Zeichnung ist mit A die geöffnete, mit B die geschlossene Ventilstellung dargestellt. In der Schliessstellung wird die Membran 36 durch die Stirnfläche 42 der Schieberhülse 40 unter Bildung einer ringförmigen Dichtfläche 58 gegen den Anströmteil 34 des Strömungskörpers 18 gepresst, wodurch ein flüssigkeitsdichter Verschluss des Ventils gewährleistet ist.Ebenso ist denkbar, dass entweder im Raum 50 oder im Raum 52 eine Druckfeder 59/60 angeordnet ist. Dadurch sind die Funktionsweisen Federkraft schliessend bzw. Federkraft öffnend realisierbar.

Wegen seiner kompakten Bauweise ist das Ventil auch bei geringen Platzverhältnissen zwischen Rohrleitungen montierbar. Das Ventil wird vorzugsweise für Rohrleitungssysteme aus Kunststoff, insbesondere auch für aggressive und korrosive Durchflussmedien verwendet, wobei mindestens die das Durchflussmedium berührenden Teile wie Gehäuse, Strömungskörper, Verschlussteil mit Kolben und Anschlussteile aus Kunststoff hergestellt sind.

Das beschriebene Ventil kann neben der Verwendung als Absperrventil auch als Durchfluss-Regelventil verwendet werden, wobei zwischen Offen-Stellung und Schliess-Stellung des Verschlussteils jede beliebige Stellung mit dem Hubantrieb einstellbar ist, wodurch eine Regelung der Durchflussmenge möglich wird. Hierzu kann das Ventil mit einem Wegmessgeber versehen sein, welche die jeweilige Stellung des Verschlussteils durch elektrische Signale einer Steuereinheit in einem Regelkreis übermittelt, wobei die Ist-Werte mit vorgegebenen Soll-Werten verglichen werden und die Steuerung über ein Magnetventil eine entsprechende Verstellung des Hubantriebes bewirkt.

## Patentansprüche

1. Ventil mit in einem axialen Durchflusskanal (16) eines Gehäuses (10) angeordnetem Strömungskörper (18) und einem mittels eines Druckmediums beaufschlagbaren Hubantrieb, der mit einem in axialer Richtung (x) verschiebbaren Verschlussteil (40) wirkverbunden ist,
dadurch gekennzeichnet,
dass das Verschlussteil (40) vom Durchflusskanal (16) über eine zwischengeordnete, zum Schliessen des Ventils vom Verschlussteil (40) flüssigkeitsdicht gegen den Strömungskörper (18) anpressbare Membran (36) getrennt angeordnet ist.

2. Ventil nach Anspruch 1, dadurch gekennzeichnet, dass das Verschlussteil als Schieberhülse (40) ausgestaltet und mit einer einends als Kolben wirkenden Ringscheibe (44) verbunden ist, die an zylindrischen Innenflächen von zwei konzentrischen, einen Zylinderraum (48) ringförmigen Querschnitts bildenden Gehäuseführungen (22a,b) in axialer Richung (x) gleitend verschiebbar ist und andernends eine gegen den Stömungskörper (18) bewegbare Stirnfläche (42) aufweist, wobei der Zylinderraum (48) gegenüber dem Durchflusskanal (16) mittels der die Gehäuseteile (22a,b) miteinander verbindenden, zum Schliessen des Ventils von der Stirnfläche (42) der Schieberhülse (40) dichtend gegen den Strömungskörper (18) anpressbaren Membran (36) verschlossen ist.

3. Ventil nach Anspruch 2, dadurch gekennzeichnet, dass der Zylinderraum (48) von der als Kolben wirkenden Ringscheibe (44) in zwei unabhängig voneinander mit dem Druckmedium beaufschlagbare Zylinderteilräume (50,52) unterteilt ist.

4. Ventil nach einem der Ansprüche 1 bis 3, dadurch gekennzeichnet, dass die Membran (36) aus gummielastischem Material besteht.

5. Ventil nach einem der Ansprüche 1 bis 4, dadurch gekennzeichnet, dass die Membran (36) im wesentlichen trichterförmig ausgebildet ist.
